# FASCICULE DE BREVET EUROPEEN

(11) **EP 3 178 090 B1**
(45) Date de publication et mention de la délivrance du brevet: **16.02.2022**
(21) Numéro de dépôt: 15753714.3
(22) Date de dépôt: 26.06.2015
(51) Int. Cl.: H01B 7/00, H01B 1/02

(54) **CONDUCTEUR ÉLECTRIQUE POUR DES APPLICATIONS AÉRONAUTIQUES**
ELEKTRISCHER LEITER FÜR LUFTFAHRTANWENDUNGEN
ELECTRICAL CONDUCTOR FOR AERONAUTICAL APPLICATIONS

(30) Priorité: 06.08.2014 FR 1457650
(43) Date de publication de la demande: 14.06.2017
(73) Titulaire: Nexans, 92400 Courbevoie (FR)
(72) Inventeur: RYBSKI, Patrick, 91330 Yerres (FR); DABLEMENT, Sébastien, 59195 Oisy (FR)
(74) Mandataire: Ipsilon
(86) Numéro de dépôt international: PCT/FR2015/051734
(87) Numéro de publication internationale: WO 2016/020588

(56) Documents cités:
- JP-A- S5 060 792
- JP-A- S59 205 106
- US-A- 1 810 499
- US-A1- 2007 187 134
- US-A1- 2007 190 881
- US-A1- 2007 202 349

## Description

L'invention se rapporte à un conducteur électrique pour des applications aéronautiques.

Ce type de conducteur existe et a déjà fait l'objet de brevet. On peut par exemple citer la demande de brevet US2010/0096162 A1, qui se rapporte à un conducteur allégé composite aluminium / cuivre. US2007/0202349 divulgue des conducteurs avec des alliages argent/cuivre.

Les conducteurs à âme divisée sont généralement constitués de plusieurs couches de brins élémentaires. Le nombre de ces couches, leur constitution, leur construction et leur sens d'assemblage, ainsi que le profil et le diamètre de chaque brin, constituent les principaux éléments qui déterminent la section conductrice du conducteur.

Les conducteurs pour câbles électriques selon l'invention, qui sont particulièrement adaptés à des applications aéronautiques, présentent des performances améliorées de conduction électrique et de résistance mécanique, tout en étant légers.

L'invention a pour objet un conducteur électrique possédant au moins un brin conducteur.

La principale caractéristique d'un conducteur selon l'invention est qu'il comporte au moins un brin constitué au minimum d'une couche de cuivre et d'une couche d'alliage de cuivre argenté, dont le taux massique d'argent est compris entre 0.1% et 0.5%. Le taux massique représente le rapport entre la masse d'argent sur la masse d'alliage de cuivre argenté. La contribution spécifique de chaque brin constitué d'une couche en cuivre, et d'une couche d'alliage de cuivre argenté, dont le taux massique d'argent est compris entre 0.1% et 0.5%, est de permettre au conducteur d'avoir une résistance mécanique supérieure à celle d'un brin de cuivre de section équivalente, sans en dégrader la conductibilité électrique. Le conducteur peut posséder, soit un seul brin soit plusieurs brins d'une telle composition. Ledit conducteur peut également comprendre d'autres brins conducteurs constitués de compositions différentes.

Avantageusement, un conducteur électrique selon l'invention, comprend au moins un brin conducteur réalisé dans un matériau à choisir parmi du cuivre, de l'aluminium, un alliage de cuivre, et un alliage d'aluminium. Le conducteur est réalisé par assemblage de plusieurs brins, afin d'atteindre la section conductrice objective. Les brins constitutifs du conducteur peuvent être de section identique entre eux ou être de section différente.

De façon préférentielle, un conducteur électrique selon l'invention, comprend une couche périphérique de plusieurs brins conducteurs constitués au minimum d'une couche de cuivre et d'une couche d'alliage de cuivre argenté, dont le taux massique d'argent est compris entre 0.1% et 0.5%. En effet, des brins disposés en périphérie du conducteur et constitués au minimum d'une couche de cuivre et d'une couche de cuivre argentés permettent de minimiser les résistances de contact, consécutives au raccordement des pièces de connexion par l'utilisateur.

Préférentiellement, un conducteur électrique selon l'invention comprend un brin central en alliage haute ténacité, six brins intermédiaires entourant ledit brin central et réalisé en alliage d'aluminium et douze brins périphériques constitués au minimum d'une couche de cuivre et d'une couche d'alliage de cuivre argenté, dont le taux massique d'argent est compris entre 0.1% et 0.5%. Il est supposé que les brins périphériques entourent les brins intermédiaires. Préférentiellement, chaque brin intermédiaire est en contact avec le brin central et au moins un brin périphérique.

De façon avantageuse, les brins conducteurs sont recouverts d'une couche protectrice vis-à-vis de la corrosion. Les contraintes mécaniques, les variations de température, d'hygrométrie et de pression, ainsi que les matériaux d'isolation, imposent en effet au conducteurs, et donc aux brins constituants ces conducteurs, une adaptation spécifique vis-à-vis des risques de corrosion.

Avantageusement, la couche protectrice et une couche de nickel.

De façon préférentielle, la section transversale de chaque brin conducteur est comprise entre 0.15mm² et 2 mm². Ce dimensionnement de la section est valable pour tous les brins du conducteur, qu'ils soient en position centrale ou en position périphérique au sein dudit conducteur.

Préférentiellement, les brins conducteurs sont arrangés ensemble de manière à ce que la section circulaire dudit conducteur soit la plus circulaire possible. En effet, un tel conducteur est facile à manipuler. De plus, son comportement en flexion est identique, quelle que soit la direction de flexion. Il peut donc plus facilement être déployé puis raccordé afin de réaliser une liaison électrique entre différents dispositifs.

L'invention a pour deuxième objet un câble électrique comprenant au moins un conducteur électrique conforme à l'invention. Un tel câble peut par exemple comprendre au moins une gaine isolante en polymère, et/ou au moins un autre organe fonctionnel filaire, de type fibre optique.

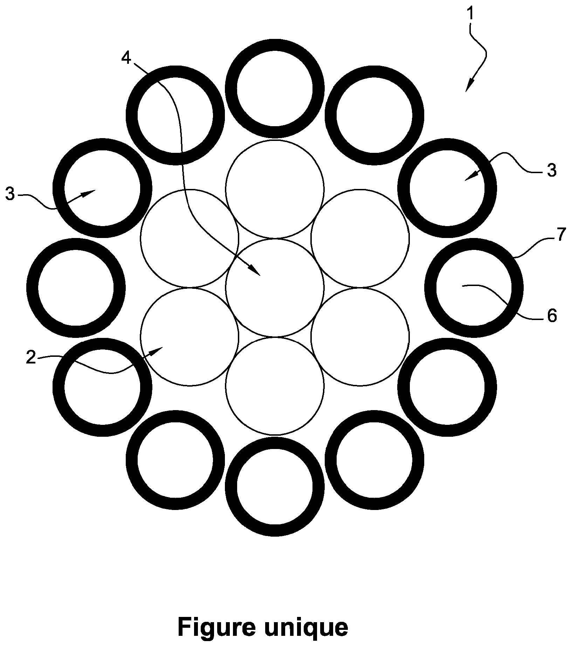

On donne ci-après, une description détaillée d'un mode de réalisation préféré d'un conducteur électrique selon l'invention en se référant à la figure unique.
- La figure unique est une vue en coupe transversale d'un conducteur électrique selon l'invention.

Pour ce mode de réalisation particulier, un conducteur 1 selon l'invention comprend en tout dix-neuf brins élémentaires 2, 3, 4. Chaque type de brin 2, 3, 4 est réalisé au préalable et séparément selon un procédé métallurgique, qui lui est propre.

En se référant à la figure unique, un conducteur électrique 1 selon l'invention, comprend un brin central 4 en alliage de cuivre haute ténacité, six brins intermédiaires 2 en aluminium et assemblés autour dudit brin central 4, et douze brins périphériques 3 constitués eux-mêmes d'une couche de cuivre 6 et d'une couche d'alliage de cuivre argentés 7, et assemblés autour desdits six brins intermédiaires 2. Le taux massique d'argent de ces brins périphériques 3 est compris entre 0.1% et 0.5%.

Tous ces brins 2, 3, 4 sont revêtus d'une couche protectrice à la corrosion, qui est déposée par électrodéposition. Préférentiellement, cette couche protectrice est en nickel.

La cohésion d'assemblage de ces brins 2, 3, 4 est obtenue au moyen d'une opération d'assemblage, communément appelée toronnage, et qui permet par torsadage et selon une valeur de pas préférentielle, de maintenir la position relative de chaque brin 2, 3, 4 par rapport aux autres.

Une répartition géométrique de dix-neuf brins 2, 3, 4 permet d'obtenir la meilleure cylindricité possible du conducteur 1.

Par rapport à un conducteur existant et réalisé avec dix-neuf brins en alliage de cuivre, un conducteur 1 selon l'invention, présente les caractéristiques suivantes,
- une masse linéique réduite de 25 %,
- une résistance linéique équivalente,
- un diamètre extérieur identique.

## Revendications

1. Conducteur électrique (1) possédant au moins un brin conducteur (2, 3, 4), **caractérisé en ce qu'**il comporte au moins un brin (2, 3, 4) constitué au minimum d'une couche de cuivre et d'une couche d'alliage de cuivre argenté, dont le taux massique d'argent est compris entre 0.1% et 0.5%.

2. Conducteur électrique selon la revendication 1, **caractérisé en ce qu'**il comprend au moins un brin (2, 3, 4) réalisé dans un matériau à choisir parmi du cuivre, de l'aluminium, un alliage de cuivre, et un alliage d'aluminium.

3. Conducteur électrique selon l'une quelconque des revendications 1 ou 2, caractérisé en qu'il comprend une couche périphérique de plusieurs brins (3) conducteurs constitués au minimum d'une couche de cuivre et d'une couche d'alliage de cuivre argenté, dont le taux massique d'argent est compris entre 0.1% et 0.5%.

4. Conducteur électrique selon la revendication 3, **caractérisé en ce qu'**il comprend un brin central (4) en alliage haute ténacité, six brins intermédiaires (2) entourant ledit brin central (4) et réalisé en alliage d'aluminium, et douze brins périphériques (3) constitués au minimum d'une couche de cuivre (6) et d'une couche d'alliage de cuivre argenté (7), dont le taux massique d'argent est compris entre 0.1% et 0.5%.

5. Conducteur électrique selon l'une quelconque des revendications 1 à 4, **caractérisé en ce que** les brins conducteurs (2, 3, 4) sont recouverts d'un couche protectrice vis-à-vis de la corrosion.

6. Conducteur électrique selon la revendication 5, **caractérisé en ce que** la couche protectrice et une couche de nickel.

7. Conducteur électrique selon l'une quelconque des revendications 1 à 6, **caractérisé en ce que** la section transversale de chaque brin conducteur (2, 3, 4) est comprise entre 0.15mm² et 2 mm².

8. Conducteur électrique selon l'une quelconque des revendications 1 à 7, **caractérisé en ce que** les brins conducteurs (2, 3, 4) sont arrangés ensemble de manière à ce que la section circulaire dudit conducteur (1) soit circulaire.

9. Câble électrique comprenant au moins un conducteur électrique (1) conforme à l'une quelconque des revendications 1 à 8.

## Patentansprüche

1. Elektrischer Leiter (1), aufweisend mindestens eine Leitungsader (2, 3, 4), **dadurch gekennzeichnet, dass** er mindestens eine Ader (2, 3, 4) umfasst, die mindestens aus einer Kupferschicht und einer Schicht aus versilberter Kupferlegierung besteht, wobei das Massenverhältnis von Silber im Bereich zwischen 0,1 % und 0,5 % liegt.

2. Elektrischer Leiter nach Anspruch 1, **dadurch gekennzeichnet, dass** er mindestens eine Ader (2, 3, 4) umfasst, hergestellt aus einem Material, das aus Kupfer, Aluminium, einer Kupferlegierung und einer Aluminiumlegierung zu wählen ist.

3. Elektrischer Leiter nach einem der Ansprüche 1 oder 2, **dadurch gekennzeichnet, dass** er eine Umfangsschicht aus mehreren Leitungsadern (3) umfasst, die mindestens aus einer Kupferschicht und einer Schicht aus versilberter Kupferlegierung besteht, wobei das Massenverhältnis von Silber im Bereich zwischen 0,1 % und 0,5 % liegt.

4. Elektrischer Leiter nach Anspruch 3, **dadurch gekennzeichnet, dass** er eine zentrale Ader (4) aus einer Legierung mit hoher Zähigkeit, sechs Zwischenadern (2), die die zentrale Ader (4) umgeben und hergestellt aus einer Aluminiumlegierung und zwölf Umfangsadern (3) umfasst, die aus mindestens einer Kupferschicht (6) und einer Schicht aus versilberter Kupferlegierung (7) bestehen, wobei das Massenverhältnis von Silber im Bereich zwischen 0,1 % und 0,5 % liegt.

5. Elektrischer Leiter nach einem der Ansprüche 1 bis 4, **dadurch gekennzeichnet, dass** die Leitungsadern (2, 3, 4) mit einer Schutzschicht gegen Korrosion bedeckt sind.

6. Elektrischer Leiter nach Anspruch 5, **dadurch gekennzeichnet, dass** die Schutzschicht eine Nickelschicht ist.

7. Elektrischer Leiter nach einem der Ansprüche 1 bis 6, **dadurch gekennzeichnet, dass** der Querschnitt jeder Leitungsader (2, 3, 4) im Bereich zwischen 0,15 mm² und 2 mm² liegt.

8. Elektrischer Leiter nach einem der Ansprüche 1 bis 7, **dadurch gekennzeichnet, dass** die Leitungsadern (2, 3, 4) zusammen derart angeordnet sind, dass der Kreisquerschnitt des Leiters (1) kreisförmig ist.

9. Elektrisches Kabel, umfassend mindestens einen elektrischen Leiter (1) nach einem der Ansprüche 1 bis 8.

## Claims

1. An electrical conductor (1) having at least one conductive strand (2, 3, 4), **characterized in that** it comprises at least one strand (2, 3, 4) composed at least of a copper layer and a layer in silver copper alloy having a weight content of silver of between 0.1 % and 0.5 %.

2. The electrical conductor according to claim 1, **characterized in that** it comprises at least one strand (2, 3, 4) in a material to be selected from among copper, aluminium, a copper alloy, and an aluminium alloy.

3. The electrical conductor according to any of claims 1 or 2, **characterized in that** it comprises a peripheral layer of several conductive strands (3) composed at least of a copper layer and a layer in silver copper alloy having a weight content of silver of between 0.1 % and 0.5 %.

4. The electrical conductor according to claim 3, **characterized in that** it comprises a central strand (4) in high-toughness alloy, six intermediate strands (2) in aluminium alloy surrounding said central strand (4), and twelve peripheral strands (3) composed at least of a copper layer (6) and a layer in silver copper alloy (7) having a weight content of silver of between 0.1 % and 0.5 %.

5. The electrical conductor according to any of claims 1 to 4, **characterized in that** the conductive strands (2, 3, 4) are coated with a layer protecting against corrosion.

6. The electrical conductor according to claim 5, **characterized in that** the protective layer is a nickel layer.

7. The electrical conductor according to any of claims 1 to 6, **characterized in that** the cross-section of each conductive strand (2, 3, 4) is between 0.15 mm²and 2 mm².

8. The electrical conductor according to any of claims 1 to 7, **characterized in that** the conductive strands (2, 3, 4) are arranged together so that the circular cross-section of said conductor (1) is circular.

9. An electrical cable comprising at least one electrical conductor (1) conforming to any of claims 1 to 8.
